# EUROPEAN PATENT APPLICATION

(11) **EP 2 007 097 A1**
(43) Date of publication of application: **24.12.2008**
(21) Application number: 07011972.2
(22) Date of filing: 19.06.2007
(51) Int. Cl.: H04L 29/06

(54) **Method, apparatuses and computer readable media for detecting whether user equipment resides in a trusted or a non-trusted access network**

(71) Applicant: Panasonic Corporation, Kadoma-shi Osaka 571-8501 (JP)
(72) Inventor: Bachmann, Jens, 63225 Langen (DE); Aramaki, Takashi, 1-3-7, Shiromi Chu-ku Osaka 540-6319 (JP); Schuringa, Jon, 63225 Langen (DE)
(74) Representative: Grünecker, Kinkeldey, Stockmair & Schwanhäusser Anwaltssozietät

(57) **Abstract**

The present invention provides a method, gateway, user equipment, network and computer-readable medium for trust relationship detection between a core network and an access network for a user equipment connected to the access network, wherein the core network comprises a first gateway and a second gateway. The method comprises the steps of sending by the user equipment a message to the core network via the second gateway. It is then decided whether the user equipment resides in a trusted or a non-trusted access network. The first gateway sends a message to the user equipment via a first tunnel between the first gateway and the user equipment, the tunnel being tunnelled between the second gateway and the user equipment if the user equipment resides in a non-trusted access network, and the first gateway sends a message to the user equipment via a second tunnel between the first gateway and the user equipment if the user equipment resides in a trusted access network.

## Description

The invention generally relates to mobile communications and in particular to mobility signalling after handover or after initial attach to a non-3GPP access network.

The invention concerns a method for trust relationship detection in a mobile network between a core network and a non-3GPP access network.

In 3GPP the evolution of the system architecture is specified in the standards (3GPP TS 23.401 and 3GPP TS 23.402). One aspect of the evolution is the support of 3GPP (3rd Generation Partnership Project) access (e.g. GERAN (GSM/Edge Radio Access Network), UTRAN (UMTS Terrestrial Radio Access Network), E-UTRAN (Evolved-UTRAN)), non-3GPP accesses (e.g. WLAN (Wireless Local Area Network), WiMAX (Worldwide Interoperability for Microwave Access), 3GPP2 (3rd Generation Partnership Project 2), etc.) and also mobility between them. The anchor for the mobility between the 3GPP and the non-3GPP accesses is a Gateway in the 3GPP Core Network, that also provides the interface to the external Packet Data Network (PDN), and is called PDN GW. The mobility between 3GPP and non-3GPP accesses is based on Mobile IP, whereby the protocol used can be either Client Mobile IP (D. Johnson, C. Perkins, J. Arkko, "Mobility Support in IPv6", RFC 3775, June 2004; H. Soliman, "Mobile IPv6 support for dual stack Hosts and Routers (DSMIPv6)", draft-ietf-mip6-nemo-v4traversal-04.txt, March 2007) or Proxy Mobile IP (S. Gundavelli, K. Leung, V. Devarapalli, K. Chowdhury, B. Patil, "Proxy Mobile IPv6", draft-ietf-netlmm-proxymip6-00.txt, April 2007). The non-3GPP accesses are separated into trusted accesses and untrusted accesses. The assumption for untrusted accesses is, that a UE (User Equipment) in an untrusted access needs first a secure tunnel (based on IPsec (Internet Protocol Security)) to an evolved Packet Data Gateway (ePDG) before being able to access operator services. The ePDG is similar to the PDG used for Interworking WLAN (described in TS 23.234). On the other hand from trusted accesses this secure tunnel is not needed. Whether a non-3GPP access is trusted or not is an operator decision and may be different from operator to operator.

For mobility within the same or between different non-3GPP accesses similar mechanisms can be used as for mobility between 3GPP and non-3GPP accesses, i.e. Client or Proxy Mobile IP (Internet Protocol).

As described above, 2 different types of non-3GPP accesses are defined, i.e. untrusted non-3GPP access and trusted non-3GPP access and whether a non-3GPP access is trusted or not is left to the 3GPP operator. Furthermore, a non-3GPP access may be a trusted access for one UE from an operator A and an untrusted access for another UE from operator A.

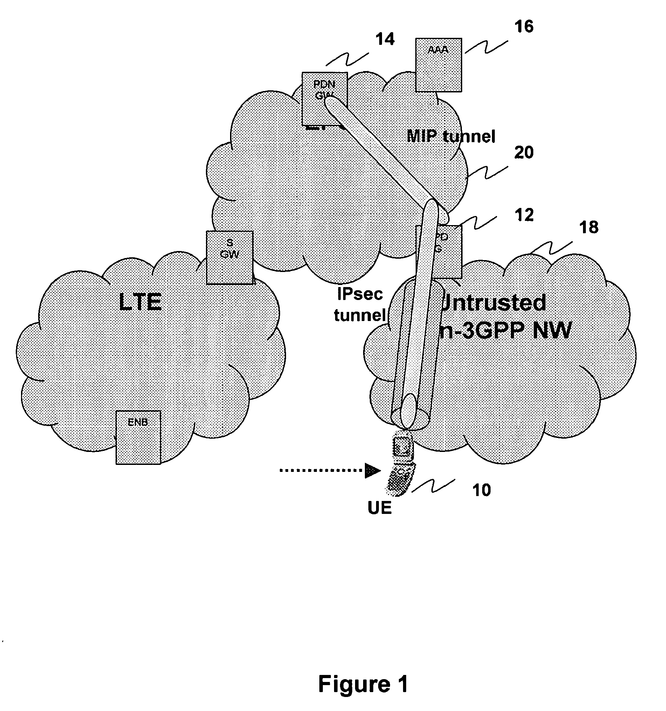

When the UE moves into or attaches initially in an untrusted non-3GPP access (Figure 1), it has to discover an ePDG first, establish an IPsec Key Exchange IKEv2/IPsec tunnel with the ePDG and can connect to the Evolved Packet Core EPC (PDN GW) over the ePDG IPsec tunnel.

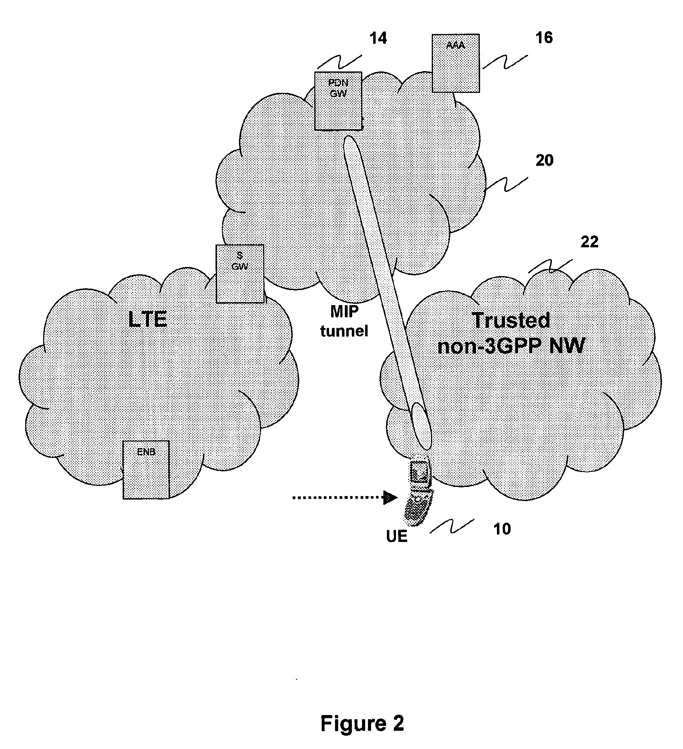

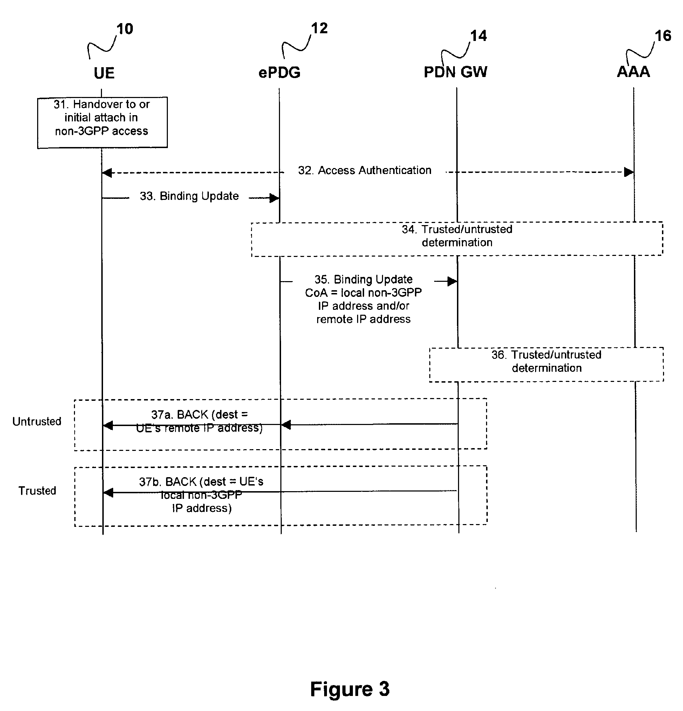

On the other hand when the UE moves into or attaches initially in a trusted non-3GPP access (Figure 2) it can connect directly to the EPC (PDN GW). The problem is that during initial attach or after handover to non-3GPP access (Fig.3), UE does not know whether the access is trusted or untrusted and if:
- tunnel to ePDG should be established and afterwards BU can be sent to PDN GW, or
- BU can be sent to PDN GW directly.

As described above, a UE starting connection establishment with a non-3GPP access network (after handover or with initial attach) may not know whether the non-3GPP access network is trusted or untrusted.

Several possible solutions exist regarding how the UE may detect the trust relationship of the non-3GPP access network. Some of the solutions are described in the following and also possible problems with these solutions are highlighted:
1. Some Radio Access Technologies (RATs) are trusted by default (WiMAX) and others are untrusted by default (WLAN 802.11). The problem with this solution is, that it may not be true, because it could be an operator's decision whether a RAT is trusted or not. Further it may depend on the UE capabilities whether a non-3GPP access is trusted for this UE or not, e.g. it could be trusted if the UE supports specific security means.
2. The UE is pre-configured with a list of network prefixes from trusted non-3GPP accesses. The problem here is that this list can get quite large, for example if an operator has trust relationships with a large number of small non-3GPP access hotspot operators. Furthermore, new non-3GPP access networks may join continually and thus the list must be kept up to date and this could be difficult or rather inefficient if there are a large number of UEs that must be updated.
3. The UE may be informed during AAA (Authentication, Authorisation and Accounting) procedures, e.g. by EAP (Extensible Authentication Protocol) extensions. This solution requires support from local non-3GPP access AAA protocols and infrastructure, however it can not be assumed that this is always supported.
4. The UE is informed by lower layer information (e.g. on L2). Also here the problem is, that it requires support from the non-3GPP access network, i.e. the lower layers (e.g. by some means provided by IEEE 802.11 u or IEEE 802.21).
5. The UE tries to establish the connection to the PDN GW, i.e. sends a Binding Update directly to the PDN GW address (or to PDN GW and ePDG in parallel) and if the establishment to the PDN GW fails (because the PDN GW is not reachable from the untrusted non-3GPP access), the UE knows that it is in an untrusted non-3GPP access and the ePDG must be used. The Problem is that the UE must try several times to reach the PDN GW until it can reliable conclude that the PDN GW is not reachable, thus the procedure is very slow.
6. The UE always uses the ePDG first, i.e. establishes the tunnel to an ePDG, and if the non-3GPP access is trusted, the UE is informed to connect to the PDN GW directly.
   The problem with this solution is, that it consumes higher resources at the beginning, because all packets are double tunnelled (IPsec + MIP tunnel) and routed over the ePDG, thus it is not very efficient.
7. The UE may ask a DHCP server (R. Droms, J. Bound, B. Volz, T. Lemon, C. Perkins, M. Carney "Dynamic Host Configuration Protocol for IPv6 (DHCPv6)", RFC 3315, July 2003) if it is in a trusted or untrusted non-3GPP access. Here, at first the UE connects to the non-3GPP access and the L2 access is established. Then the UE requests a DHCP server about the trust relationship (including its identity, e.g. in form of a NAI, and/or also the user's home operator identifier). If the non-3GPP access is trusted for the user's home operator and for the user, the DHCP server informs the user about the trust relationship and may return in addition an IP address of the PDN GW. If the non-3GPP access is untrusted for the user's home operator and the user, the DHCP server informs the user about the trust relationship and may return in addition an IP address of the ePDG. Problem here is, that this solution requires a pre-configured entry in the local DHCP server or support by the AAA infrastructure, so that the DHCP server is updated with information for the UE during the access authentication of the UE. But if this is not available, DHCP may not be able to return a valid IP address. In this case the UE may use an ePDG per default. However, this process might be slow.
8. The UE may ask a DNS server if it is in a trusted or untrusted non-3GPP access. Here, at first the UE connects to the non-3GPP access and establishes L2 and L3 access. Then, the UE may construct an UE or operator specific FQDN (Fully Qualified Domain Name), e.g. for the service or PDN, for example as follows:
   FQDN=<pdn>.<non-3gpp>.<hplmn>.3gppnetwork.orgor
   FQDN= <pdn>.<user id>.<non-3gpp>.<hplmn>.3gppnetwork.org

Here the hplmn part is an identifier of the user's home operator, e.g. the MNC (Mobile Network Code) and MCC (Mobile Country Code) codes, the non-3GPP part is some information about the non-3GPP network, e.g. an advertised Network Access identifier or the advertised IP prefix, the user id part is an identifier of the user, e.g. a NAI (Network Access identifier). The UE asks the DNS (Domain Name Server) system about this specific FQDN and the DNS request will be resolved recursively. If it can not be resolved by a previous DNS server, it will be finally resolved by the DNS server of the UE's home operator. If the non-3GPP access is untrusted, the DNS server will provide an ePDG together with an IP address. Then the UE should establish a tunnel to the ePDG and send the BU to the PDN GW over the tunnel. If the non-3GPP access is trusted, the DNS server will provide a PDN GW together with an IP address. Then the UE should send the BU to the PDN GW directly. Problem here could be that the resolution is quite slow.

The present invention has been made in consideration of the situation described above and has as its object to make mobility signalling after handover or after initial attach to a non-3GPP access network more efficient.

The object is solved by the subject matter of the independent claims. Advantageous embodiments of the invention are subject matters to the dependent claims.

To achieve this object, the present invention provides a method, gateway, user equipment, network and computer-readable medium for trust relationship detection between a core network and an access network for a user equipment connected to the access network, wherein the core network comprises a first gateway and a second gateway. The method comprises the steps of sending by the user equipment a message to the core network via the second gateway. It is then decided whether the user equipment resides in a trusted or a non-trusted access network. The first gateway sends a message to the user equipment via a tunnel between the first gateway and the user equipment, the tunnel being tunnelled between the second gateway and the user equipment if the user equipment resides in a non-trusted access network, and the first gateway sends a message to the user equipment via a tunnel between the first gateway and the user equipment if the user equipment resides in a trusted access network.

In an advantageous embodiment of the invention the first gateway is a packet data network gateway.

In a further advantageous embodiment the second gateway is an evolved packet data gateway.

It is an advantage that the step of deciding is carried out by the second gateway or the first gateway or an authentication, authorization and accounting server.

According to an advantageous embodiment the message in the sending step is a binding update, wherein the binding update is tunnelled or included in another message.

Another embodiment of the invention further comprises the step of sending by the first gateway a binding acknowledgement message to the user equipment at an internet protocol address in the non-3GPP access network if the user equipment resides in a trusted access network.

According to a another embodiment the step of sending by the first gateway a binding acknowledgement message to the user equipment at an internet protocol address at the second gateway if the user equipment resides in a non-trusted access network is comprised.

In another advantageous embodiment of the invention the internet protocol address at the second gateway is preconfigured or dynamically determined.

Another embodiment further comprises the steps of receiving by the user equipment the binding acknowledgement message; determining that the user equipment resides in a trusted network if the internet protocol address in the non-3GPP access network is used; and determining that the user equipment resides in a non-trusted network if the internet protocol address at the second gateway is used.

Further features and advantages will become apparent from the following, and more particular description of the various embodiments of the invention as illustrated in the accompanying drawings, wherein:
Figure 1 shows an UE moving from 3GPP to an untrusted non-3GPP access network;
Figure 2 depicts the UE moving from 3GPP to a trusted non-3GPP access network;
Figure 3 is a high-level signalling flow for access to home network trust relationship detection;
Figure 4 shows an exemplary signalling flow with implicit BU and ePDG involvement; and
Figure 5 is an exemplary signalling flow with separate BU and without ePDG involvement.

The following paragraphs will describe various embodiments of the invention including the detection of a trust relationship between a 3GPP core network and a non-3GPP access network, and illustrates further, alternative, configurations.

For exemplary purposes only most of the embodiments are outlined in relation to a 3GPP communications system, and the terminology used in the subsequent sections mainly relates to 3GPP terminology. However, the terminology used and the description of the embodiments with respect to a 3GPP architecture is not intended to limit the principles and ideas of the inventions of such systems.

Also the detailed explanations given in the technical background section above are merely intended to better understand the mostly 3GPP specific exemplary embodiments described in the following, and should not be understood as limiting the invention to the described specific implementations of processors and functions in the mobile communications network.

The present invention relates to a method that allows a UE after a handover or after initially attaching to a non-3GPP access to detect whether the non-3GPP access is trusted or untrusted from the home operator point of view and in this connection to detect which tunnel to the home network to use.

In order to detect the trust relationship, the UE 10 signals mobility related messages to an ePDG 12 and the ePDG 12 forwards the message to the PDN GW 14. The ePDG 12 or the PDN GW 14 may decide or determine during the processing of the message whether the UE 10 is in a trusted 20 or untrusted 18 non-3GPP access network. If the UE 10 is in an untrusted non-3GPP access network 18 the PDN GW 14 sends a mobility message back to the UE 10 over the ePDG 12. On the other hand if the UE 10 is in a trusted non-3GPP access network 20, the PDN GW 14 sends a mobility message back to the UE 10 directly.

In dependence on the destination of the mobility message from the PDN GW 14, the UE 10 can detect whether it is a trusted 20 or untrusted 18 non-3GPP access.

A UE 10 in a non-3GPP access network is allocated an IP address, which is known to the UE 10. In an untrusted access network 18 another address is needed for the UE 10, which is allocated by the ePDG 12 and made known to the UE 10. This is the remote address.

The UE 10 tunnels a Binding Update (BU), with destination PDN GW 14, to an ePDG 12. Then the ePDG 12 may decide or determine whether the UE 10 is in a trusted 20 or untrusted 18 non-3GPP access network and sends a BU to the PDN GW 14 or the ePDG 12 forwards the BU to the PDN GW 14 and the PDN GW 14 may decide or determine whether the UE 10 is in a trusted 20 or untrusted 18 non-3GPP access network. If the UE 10 is in a trusted non-3GPP access network 20, the PDN GW 14 sends a BACK (Binding ACKnowledgement) to the UE's IP address allocated in the non-3GPP access. If the UE 10 is in an untrusted non-3GPP access network 18 the PDN GW 14 sends a BACK to the UE's IP address allocated at the ePDG (UE's remote IP address). In dependence on the destination address that is used in the BACK the UE 10 can detect whether it is a trusted 20 or untrusted 18 non-3GPP access.

In the context of this invention it is understood that sending messages using a type 2 routing header or a home address option are considered as being tunnelled.

The benefit of the solution presented in this invention is, that it allows a dynamic per UE trust/untrusted decision, that no pre-configuration is required, no lower layer or non-3GPP access support is needed, that initial double tunnelling (IPsec + MIP tunnelling) is avoided in case the UE is in a trusted non-3GPP access and it is faster than a mechanism where the UE detects the trusted/untrusted relationship e.g. via DHCP/DNS.

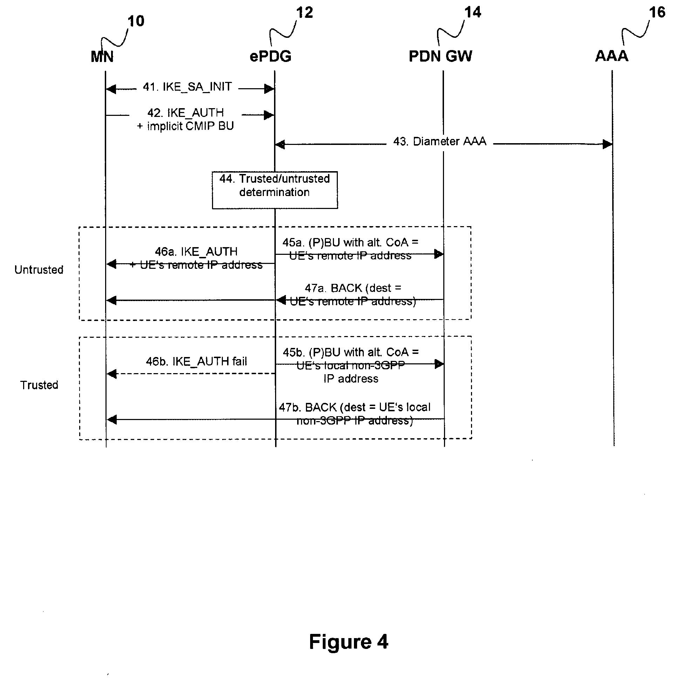

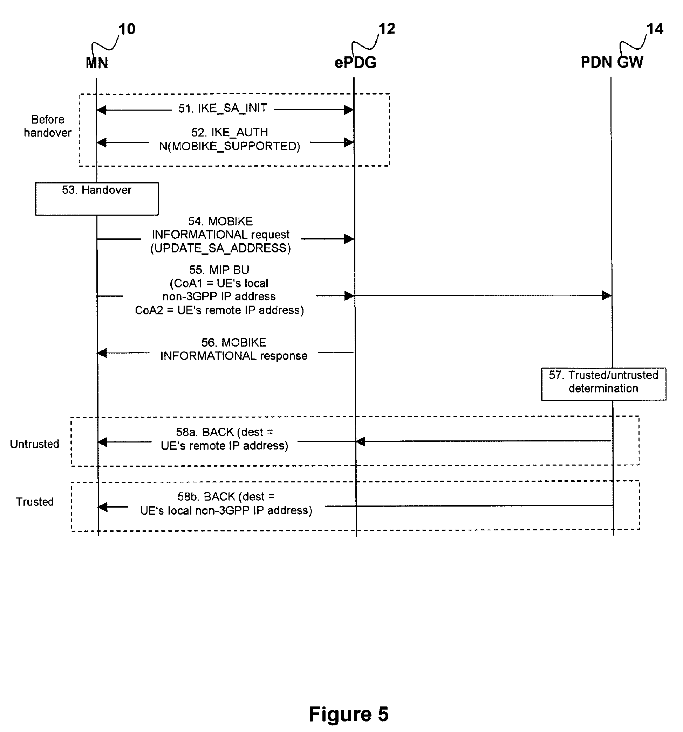

In order to detect the trust relationship between the non-3GPP access and the home operator the following high-level signalling procedure shown in Figure 3 is performed:
31. The UE performs a handover to a non-3GPP access network or initially attaches in a non-3GPP access. The UE does not know whether the non-3GPP access is trusted or not.
32. The UE may perform non-3GPP access authentication, involving the 3GPP AAA server as well.
33. The UE sends a Binding Update. The final destination of the BU is actually the PDN GW, but it is first sent to the ePDG. In order to let the ePDG receive the BU, it is either tunnelled from the UE to the ePDG or included in another message sent to the ePDG (e.g. an IKEv2 Figure 4 message). The IP address of the ePDG may be pre-configured or dynamically determined, e.g. via DHCP or DNS or anycast.
34. The ePDG may determine the trust relationship between the non-3GPP access and the home operator based on information about the non-3GPP access transferred with the Binding Update and/or information received from the AAA server and/or information received from the PDN GW. If the AAA server is involved in the determination (e.g. ePDG asks AAA server during authenticating the UE or in a separate signalling exchange), the AAA server may determine the trust relationship between the non-3GPP access and the home operator based on information about the non-3GPP access transferred during access authentication and/or information about the non-3GPP access transferred with the Binding Update and provided by the ePDG (e.g. an Access Network identifier) and/or information in a subscriber database. The AAA server may send a notification to the ePDG (e.g. PDN GW sends a response during authenticating the UE). With the notification the ePDG may be informed whether the UE is in a trusted or untrusted non-3GPP access.
35. If the ePDG is involved in the determination of the trust relationship it may modify the BU or generate a new BU and send this BU to the PDN GW. For example if the ePDG determines that the UE is in a trusted non-3GPP access, it may send a BU with Care-of Address = UE's local non-3GPP IP address to the PDN GW and if the ePDG determines on the other hand, that the UE is in a untrusted non-3GPP access, it may send a BU with Care-of Address = UE's remote IP address to the PDN GW.
   If the ePDG is not involved in the determination of the trust relationship, it may forward the BU to the PDN GW without any other processing.
36. The PDN GW may determine the trust relationship between the non-3GPP access and the home operator based on information about the non-3GPP access transferred with the Binding Update and/or information received from the AAA server.
37.
   a. If the UE is in an untrusted non-3GPP access, the PDN GW sends the Binding Acknowledge (BACK) to the UE's remote IP address. I.e. the BACK is received first by the ePDG and tunnelled from the ePDG to the UE. Based on the destination IP address used in the BACK, the UE is able to detect that it is located in an untrusted non-3GPP access network and that all traffic to the PDN GW has to be tunnelled over the ePDG.
   b. If the UE is in a trusted non-3GPP access, the PDN GW sends the Binding Acknowledge (BACK) to the UE's local non-3GPP IP address. I.e. the BACK is sent directly to the UE without going over the ePDG. Based on the destination IP address used in the BACK, the UE is able to detect that it is located in a trusted non-3GPP access network and that all traffic can be sent to the PDN GW directly.
   In this section an exemplary signalling flow is shown (see Figure 4), where the BU is not sent in a separate message, but is included in an IKEv2 message. The ePDG is able to detect this implicit BU and initiates appropriate measures as described in further detail below.
41. After handover or with initial attach to a non-3GPP access network the UE starts IKEv2 tunnel establishment with the ePDG, i.e. it sends an IKE_SA_INIT message to the ePDG and the ePDG responds with an IKE_SA_INIT message.
   After that the Diffie-Hellman exchange is completed and all subsequent messages can be encrypted and integrity protected. The IP address of the ePDG may be pre-configured or dynamically determined, e.g. via DHCP or DNS or anycast.
42. The UE starts with the IKE_AUTH exchange to authenticate itself and additionally the UE may request a remote IP address in a Configuration Payload if not yet already allocated.
   The authentication can be based for example on EAP or in order to reduce the number of message exchanges on an extension like the EAP Reauthentication Extension (ERX). With ERX the UE uses a re-authentication Integrity Key to authenticate, thus an earlier authentication is required here. In the IKE_AUTH message an additional flag may indicate that the UE wants to perform a Binding Update with the PDN GW. Furthermore the sequence number for the BU should be included (and also a timestamp may be included), e.g. to avoid race conditions.
   Another possibility for faster authentication (instead of using ERX) and sending an implicit BU is to include the BU (completely or partly) in the IDi field of the IKE_AUTH message. The IDi message is a variable length field and used for identification of the initiator. In this case the initiator is identified e.g. by its MN-NAI that is included in the BU. The BU can be authenticated with the Authentication Protocol for Mobile IPv6, i.e. a MN-AAA Security Association is used.
43. The ePDG contacts the AAA server to authenticate the UE using for example ERX or using the mechanism from the MIP6 authentication protocol.
44. After the ePDG has authenticated the UE, it can determine whether the UE is in a trusted or untrusted non-3GPP access (e.g. based on the UE's source IP address in the IKEv2 messages or on information from the AAA server or on an Access Network identifier in the IKE_AUTH message).
45.
   a. If the UE is in an untrusted non-3GPP access network, the ePDG may allocate a remote IP address for the UE and sends a BU with CoA = UE's remote IP address to the PDN GW.
      If ERX with the BU flag was used, the ePDG may send a Proxy Binding Update to the PDN GW, use the Alternative Care-of Address mobility option and set the Alt.
      CoA option to the UE's remote IP address.
      If the included BU with MIP6 Authentication Protocol was used, the ePDG can send and integrity protect a BU as sent from the UE, because it has received the keys for the MN-HA Security Association during the authentication. But in order not to forge the UE's IP address, it may also use the Alt. CoA option in this case and set it to the UE's remote IP address.
   b. If the UE is in a trusted non-3GPP access network, the ePDG sends a BU with CoA = UE's local non-3GPP IP address to the PDN GW. Here, the ePDG may not allocate a remote IP address.
      If ERX with the BU flag was used, the ePDG may send a Proxy Binding Update to the PDN GW, use the Alternative Care-of Address mobility option and set the Alt.
      CoA option to the UE's local non-3GPP IP address.
      If the included BU with MIP6 Authentication Protocol was used, the ePDG can send and integrity protect a BU as sent from the UE, because it has received the keys for the MN-HA Security Association during the authentication. But in order not to forge the UE's IP address, it may also use the Alt. CoA option in this case and set it to the UE's local non-3GPP IP address.
46.
   a. If the UE is in an untrusted non-3GPP access network, the ePDG informs the UE about the successful authentication in the IKE_AUTH message and may also inform the UE about the remote IP address in a Configuration Payload.
   b. If the UE is in a trusted non-3GPP access network, the ePDG may inform the UE in the IKE_AUTH message that the authentication has failed.
47.
   a. If the UE is in an untrusted non-3GPP access network, the PDN GW sends the Binding Acknowledge (BACK) to the UE's remote IP address. I.e. the BACK is at first received by the ePDG and tunnelled from the ePDG to the UE.
      In case the MIP6 Authentication Protocol was used to authenticate the BU, then the MIP6 Authentication Protocol is also used to authenticate the BACK.
      Based on the destination IP address used in the BACK, the UE is able to detect that it is located in an untrusted non-3GPP access network and that all traffic to the PDN GW has to be tunnelled over the ePDG.
   b. If the UE is in a trusted non-3GPP access network, the PDN GW sends the Binding Acknowledge (BACK) to the UE's local non-3GPP IP address. I.e. the BACK is sent to the UE directly, not over the UE - ePDG tunnel.
      In case the MIP6 Authentication Protocol was used to authenticate the BU, then the MIP6 Authentication Protocol is also used to authenticate the BACK.
      Based on the destination IP address used in the BACK, the UE is able to detect that it is located in a trusted non-3GPP access network and that all traffic can be sent to the PDN GW directly.
   In this section an exemplary signalling flow is shown (see Figure 5), where the BU is sent in a separate message but without significant delay. Furthermore, the trusted/untrusted determination can be transparent to the ePDG.
51. The UE starts IKEv2 tunnel establishment with the ePDG, i.e. it sends an IKE_SA_INIT message to the ePDG and the ePDG responds with an IKE_SA_INIT message. After that the Diffie-Hellman exchange is completed and all subsequent messages can be encrypted and integrity protected. The IP address of the ePDG may be pre-configured or dynamically determined, e.g. via DHCP or DNS or anycast.
52. The UE performs authentication with the ePDG using MOBIKE based on IKEv2, i.e. the UE sends a notification to the ePDG that it supports MOBIKE. Furthermore, the UE may request a remote IP address in a Configuration Payload, if not yet already allocated.
   Note: The steps 51 and 52 may be performed already before an actual handover.
53. The UE performs a handover to a non-3GPP access network and does not know, whether the non-3GPP access is trusted or untrusted.
54. The UE sends a MOBIKE INFORMATIONAL request to update the IPsec Security Association with the ePDG. Because MOBIKE is used, it is not necessary to create completely new IKE and IPsec SAs.
55. Immediately after the MOBIKE update the UE sends a Binding Update to the PDN GW over the UE - ePDG tunnel. In the BU the UE includes several Care-of Addresses, namely the UE's local non-3GPP IP address and the UE's remote IP address. To include several CoAs, the UE may use for example the Alternate Care-of Address option or an extension as proposed in the IETF WG MONAMI6.
56. The ePDG informs the UE that the SA update was successful. Note: The step 56 may be performed before step 55.
57. The PDN GW determines whether the UE is in a trusted or untrusted non-3GPP access (e.g. based on the UE's local non-3GPP IP address in the BU messages or on information obtained from the AAA server or on additional information in the BU, like an Access Network identifier).
58.
   a. If the UE is in an untrusted non-3GPP access network, the PDN GW sends the Binding Acknowledge (BACK) to the UE's remote IP address. I.e. the BACK is at first received by the ePDG and tunnelled from the ePDG to the UE.
      Based on the destination IP address used in the BACK, the UE is able to detect that it is located in an untrusted non-3GPP access network and that all traffic to the PDN GW has to be tunnelled over the ePDG.
   b. If the UE is in a trusted non-3GPP access network, the PDN GW sends the Binding Acknowledge (BACK) to the UE's local non-3GPP IP address. I.e. the BACK is sent to the UE directly, not over the UE - ePDG tunnel.
      Based on the destination IP address used in the BACK, the UE is able to detect that it is located in a trusted non-3GPP access network and that all traffic can be sent to the PDN GW directly.

### General Issues and Variants

The signalling flows above are only examples. Other variants are also possible, for example in one variant the Binding Update may be sent separately also without the use of MOBIKE, only with use of simple IKE or in another variant the BU may be also implicitly included in a MOBIKE update message and then the procedure may be not transparent to the ePDG.

Another embodiment of the invention relates to the implementation of the various embodiments described above using hardware and software. It is recognised that the various methods mentioned above may be implemented using computing devices (processors), as for example general purpose processors, Digital Signal Processors (DSP), Application Specific Integrated Circuits (ASIC), Field Programmable Gate Arrays (FPGA) or other programmable logic devices, etc. The various embodiments of the invention may also be performed or embodied by a combination of these devices.

Further, the various embodiments of the invention may also be implemented by means of software modules which are executed by a processor or directly in hardware. Also, a combination of software modules and hardware implementation may be possible. The software modules may be stored in any kind of computer-readable storage medium, for example RAM, EPROM, EEPROM, flash memory, registers, hard disks, CD-ROM, DVD, etc.

## Claims

1. Method for trust relationship detection between a core network and an access network for a user equipment connected to the access network, wherein the core network comprises a first gateway and a second gateway, the method comprising the steps of:
sending (33) by the user equipment a message to the core network via the second gateway;
deciding (36) whether the user equipment resides in a trusted or a non-trusted access network;
sending (37a) by the first gateway a message to the user equipment via a first tunnel between the first gateway and the user equipment, the tunnel being tunnelled between the second gateway and the user equipment if the user equipment resides in a non-trusted access network;
sending (37b) by the first gateway a message to the user equipment via a second tunnel between the first gateway and the user equipment if the user equipment resides in a trusted access network.

2. The method according to claim 1 wherein the first gateway is a packet data network gateway.

3. The method according to claim 1 or 2, wherein the second gateway is an evolved packet data gateway.

4. The method according to any of claims 1 to 3, wherein the step of deciding is carried out by the second gateway.

5. The method according to any of claims 1 to 3, wherein the step of deciding is carried out by the first gateway.

6. The method according to any of claims 1 to 3, wherein the step of deciding is carried out by an authentication, authorization and accounting server.

7. The method according to any of claims 1 to 6, wherein the message in the sending step is a binding update, wherein the binding update is tunnelled or included in another message.

8. The method according to any of claims 1 to 7, further comprising the step of:
sending (47b) by the first gateway a binding acknowledgement message to the user equipment at an internet protocol address in the access network if the user equipment resides in a trusted access network.

9. The method according to any of claims 1 to 7, further comprising the step of:
sending (47a) by the first gateway a binding acknowledgement message to the user equipment at an internet protocol address at the second gateway if the user equipment resides in a non-trusted access network.

10. The method according to claim 9, wherein the internet protocol address at the second gateway is preconfigured or dynamically determined.

11. The method according to any of claims 8 to 10, further comprising the steps of:
receiving by the user equipment the binding acknowledgement message;
determining that the user equipment resides in a trusted network if the internet protocol address in the access network is used; and
determining that the user equipment resides in a non-trusted network if the internet protocol address at the second gateway is used.

12. A network wherein a trust relationship between a core network (20) and an access network (18) is detected for a user equipment (10), wherein the core network (20) comprises a first gateway (14) and a second gateway (12), wherein:
the user equipment (10) is adapted to send a message to the core network (20) via the second gateway (12);
the core network (20) is adapted to decide whether the user equipment (10) resides in a trusted or a non-trusted access network;
the first gateway (14) is adapted to send a message to the user equipment (10) via a first tunnel between the first gateway and the user equipment, the tunnel being tunnelled between the second gateway (12) and the user equipment if the user equipment (10) resides in a non-trusted access network (18); and
the first gateway (14) is adapted to send a message to the user equipment (10) via a second tunnel between the first gateway and the user equipment if the user equipment (10) resides in a trusted access network (22).

13. The network according to claim 12 adapted to carry out the steps of the method according to claims 2 to 11.

14. A gateway (14) in a core network (20), wherein a trust relationship between the core network (20) and an access network is detected for a user equipment (10) connected to the access network , the gateway (14) comprising:
reception means adapted to receive a message from the user equipment (10);
decision means adapted to decide whether the user equipment (10) resides in a trusted or non-trusted access network;
transmission means adapted to send a message to the user equipment (10) via a first tunnel between the gateway (14) and the user equipment, the tunnel being tunnelled between another gateway (12) and the user equipment if the user equipment resides in a non-trusted access network (18); and
transmission means adapted to send a message to the user equipment (10) via a second tunnel between the gateway and the user equipment if the user equipment (10) resides in a trusted access network (22).

15. The gateway (14) according to claim 14, wherein the gateway is a packet data network gateway.

16. The gateway (14) according to claim 14 or 15, wherein the gateway is adapted to carry out the steps of the method of any of claims 7 to 11.

17. A gateway (12) in a core network (20), wherein a trust relationship between the core network (20) and an access network is detected for a user equipment (10) connected to the access network, the gateway (12) comprising:
reception means adapted to receive a message from the user equipment (10);
decision means adapted to decide whether the user equipment (10) resides in a trusted or non-trusted access network; and
communication means adapted to carry a message between another gateway (14) and the user equipment (10) if the user equipment (10) resides in a non-trusted access network (18).

18. The gateway (12) according to claim 17, wherein the gateway is an evolved packet data gateway.

19. The gateway (12) according to claim 17 or 18, wherein the gateway is adapted to carry out the steps of the method according to any of claims 7 to 11.

20. A user equipment (10) connected to an access network, wherein a trust relationship between a core network (20) comprising a first (14) and second (12) gateway and the access network is detected, the user equipment (10) comprising:
transmission means adapted to send a message to the core network (20) via the second gateway (12); and
reception means adapted to receive a message from the first gateway (14) via a first tunnel between the first gateway and the user equipment, the tunnel being tunnelled between the second gateway (12) and the user equipment if the user equipment (10) resides in a non-trusted access network (18); and
reception means being adapted to receive a message from the first gateway (14) via a second tunnel between the first gateway and the user equipment if the user equipment (10) resides in a trusted access network (22).

21. The user equipment (10) according to claim 21, wherein the user equipment is adapted to carry out the steps of the method according to any of claims 2 to 11.

22. A computer-readable medium storing instructions that, when executed by a processor of a gateway in a core network of a network, cause the gateway to detect a trust relationship between the core network and an access network for a user equipment, by:
receiving a message from the user equipment;
deciding whether the user equipment resides in a trusted or a non-trusted access network;
sending a message to the user equipment via a first tunnel between the gateway and the user equipment, the tunnel being tunnelled between another gateway and the user equipment if the user equipment resides in a non-trusted access network;
sending a message to the user equipment via a second tunnel between the gateway and the user equipment if the user equipment resides in a trusted access network.

23. The computer-readable medium according to claim 22 storing instructions that, when executed by a processor of a gateway in a core network of a network, cause the gateway to detect a trust relationship between the core network and an access network for a user equipment, by carrying out the steps of the method according to claims 7 to 11.

24. A computer-readable medium storing instructions that, when executed by a processor of a gateway in a core network of a network, cause the gateway to detect a trust relationship between the core network and an access network for a user equipment, by:
receiving a message from the user equipment;
deciding whether the user equipment resides in a trusted or a non-trusted access network;
carrying a message between another gateway and the user equipment if the user equipment resides in a non-trusted access network.

25. The computer-readable medium according to claim 24 storing instructions that, when executed by a processor of a gateway in a core network of a network, cause the gateway to detect a trust relationship between the core network and an access network for a user equipment, by carrying out the steps of the method according to claims 7 to 11.

26. A computer-readable medium storing instructions that, when executed by a processor of a user equipment connected to an access network of a network, cause the user equipment to detect a trust relationship between the access network and a core network, wherein the core network comprises a first and second gateway, by:
sending a message to the core network via the second gateway;
receiving a message from the first gateway via a first tunnel to the first gateway, the tunnel being tunnelled between the user equipment and the second gateway if the user equipment resides in a non-trusted access network;
receiving a message from the first gateway via a second tunnel to the first gateway if the user equipment resides in a trusted access network.

27. The computer-readable medium according to claim 26 storing instructions that, when executed by a processor of a user equipment in an access network of a network, cause the user equipment to detect a trust relationship between the access network and a core network, wherein the core network comprises a first and second gateway, by carrying out the steps of the method according to claims 7 to 11.
